# FASCICULE DE BREVET EUROPEEN

(11) **EP 0 696 958 B1**
(45) Date de publication et mention de la délivrance du brevet: **12.03.1997**
(21) Numéro de dépôt: 93921988.7
(22) Date de dépôt: 04.10.1993
(51) Int. Cl.: B29C 65/04, A61J 1/00

(54) **ELECTRODE DE SOUDAGE A HAUTE FREQUENCE POUR POCHES MULTICOMPARTIMENTS A USAGE MEDICAL EN FILM PLASTIQUE, ET POCHES REALISEES GRACE A CE MATERIEL**
HOCHFREQUENZSCHWEISSELEKTRODE FÜR MEDIZINISCH GENUTZTE MEHRFACHKAMMERBEUTEL AUS EINER KUNSTSTOFFFOLIE UND AUS DIESEM MATERIAL HERGESTELLTE BEUTEL
RADIOFREQUENCY WELDING ELECTRODE FOR MULTICOMPARTMENT PLASTIC FILM BAGS INTENDED FOR MEDICAL USE, AND BAGS PRODUCED WITH SAME

(30) Priorité: 05.05.1993 FR 9305737
(43) Date de publication de la demande: 21.02.1996
(73) Titulaire: STEDIM S.A., F-13400 Aubagne (FR)
(72) Inventeur: VALLOT, Bernard, F-13012 Marseille (FR)
(74) Mandataire: Roman, Michel
(86) Numéro de dépôt international: FR9300973
(87) Numéro de publication internationale: WO9425252

(56) Documents cités:
- EP-A- 0 132 632
- EP-A- 0 313 851
- CH-A- 325 552
- DE-U- 8 914 942
- GB-A- 690 614
- GB-A- 1 344 314
- GB-A- 2 096 569

## Description

La présente invention a pour objet une électrode de soudage à haute fréquence pour poches multicompartiments à usage médical en film plastique, ainsi que les poches obtenues grâce à ce matériel.

Elle est destinée à la fabrication de poches utilisées en particulier pour la perfusion médicale et comportant au moins deux compartiments contenant des produits ne devant être mélangés qu'au moment de leur utilisation.

Dans ce type de poches, les compartiments (deux ou plus) contenant les produits constituant la composition à perfuser sont isolés de manière étanche au moyen d'un élément de pression appliquant les deux parois de la poche l'une contre l'autre. Cet élément peut être retiré à l'instant propice par l'opérateur ce qui a pour effet de permettre aux produits de se mélanger au moment voulu.

Ces poches sont le plus souvent réalisées à partir de deux feuilles de plastiques assemblées par soudage thermique. Cette technique présente l'inconvénient d'être difficile à contrôler et de ne pas toujours permettre l'insertion dans le plan de joint des tubes de remplissage et d'écoulement, ce qui rend la fabrication plus complexe, et donc plus onéreuse, la mise en place de ces tubes devant se faire généralement au cours d'opérations supplémentaires par l'intermédiaire de plaquettes soudées sur les parois de la poche.

Ces inconvénients disparaissent en utilisant le soudage haute fréquence qui est parfaitement maîtrisé et qui permet non seulement d'insérer les tubes dans le plan de joint au cours du soudage, mais également d'employer des films particulièrement adaptés à l'usage médical, en particulier l'Éthylène Vynile Acétate (EVA), ou des matériaux barrière multicouches dont une couche extérieure présente des fonctions spécifiques d'étanchéité.

Cependant, le soudage haute fréquence a pour conséquence normale de générer des bourrelets internes le long des soudures, qui ne sont pas gênants pour les poches à compartiment unique, bien au contraire. En effet, ces bourrelets représentent normalement l'un des avantages marquants de la soudure haute fréquence: ils améliorent notablement l'étanchéité et la solidité des soudures et permettent un contrôle visuel efficace de ces dernières.

Mais dans le cas des poches multicompartiments, les bourrelets rendent l'obtention de l'étanchéité entre compartiments très aléatoire, même en exerçant une pression importante. En tout état de cause, la pression qu'il faudrait engendrer pour obtenir une étanchéité satisfaisante est incompatible avec la faible force de retrait de l'élément de fermeture compatible avec un usage courant.

Le brevet N° GB 2 096 569 décrit une électrode à haute fréquence destinée à la fabrication de poches multicompartiments en film plastique, et comportant des empreintes latérales élargies permettant d'obtenir sur les lignes de soudures périphériques des parties sans bourrelet interne aux points où elles croisent les zones d'étanchéité entre deux compartiments. Ces empreintes sont formées d'éléments semi-circulaires plans entourés d'une pièce en matière isolante dont le but est d'empêcher la fusion des films plastiques autour desdites empreintes, la matière en excès refluant dans un canal périphérique de l'électrode prévu à cet effet. Ces pièces en matière isolante et le canal périphérique rendent la construction de l'ensemble complexe et nécessitent un contrôle très rigoureux des paramètres de chauffage pour éviter l'engorgement du canal et la dégradation des pièces isolantes.

Le procédé selon la présente invention supprime tous ces inconvénients. En effet, il permet de réaliser des poches multicompartiments en films plastiques de haute qualité assurant une étanchéité parfaite entre les compartiments au moyen d'éléments de pression très simples et d'une manipulation facile.

Le procédé consiste à fabriquer les poches multicompartiments par assemblage de deux films plastique souples appropriés par soudage à haute fréquence au moyen d'électrodes comportant des empreintes en relief de forme particulière permettant de créer des parties soudées fortement élargies et dépourvues de bourrelets d'excès de matière aux points où les lignes de soudure croisent la zone d'étanchéité entre compartiments.

Sur les dessins annexés, donnés à titre d'exemple non limitatif d'une des formes de réalisation de l'objet de l'invention:
la figure 1 représente une poche à trois compartiments avec système d'étanchéité en place,
la figure 2 représente la même poche après retrait du système d'étanchéité,
la figure 3 est une coupe transversale agrandie, suivant les flèches A-A de la figure 1, de la zone d'étanchéité,
la figure 4 montre, à une échelle différente, une électrode de soudage haute fréquence vue de dessus,
la figure 5 est une coupe transversale agrandie de la ligne de soudage suivant les flèches B-B de la figure 2
et la figure 6 est une coupe transversale agrandie de la zone élargie de soudage suivant les flèches C-C de la figure 2 et C' -C' de la figure 4, montrant l'une des empreintes en relief en cours de soudage.

Les figures décrites se rapportent, à titre d'exemple, à la fabrication d'une poche 1 de perfusion à trois compartiments 2, 3, 4.

Lors de la fabrication, ces compartiments sont isolés de manière étanche au moyen d'un jonc souple 5 cylindrique et d'un profilé rigide 6 de section semi-circulaire entre lesquels les deux parois 7, 8 de la poche 1 sont serrées. Avant d'être utilisées les poches sont préparées en remplissant les compartiments grâce aux tubes de remplissage 9 qui sont ensuite hermétiquement fermés. Les poches peuvent alors être conservées aussi longtemps que nécessaire sans que les produits contenus dans les différents compartiments ne risquent d'entrer en contact.

A la mise en service, la poche est accrochée à une potence adéquate par un oeilleton 10 prévu à cet effet à sa partie supérieure, et le conduit de perfusion est raccordé au tube d'écoulement 11 situé à la base du compartiment inférieur 4. Le jonc souple 5, qui est suffisamment long pour dépasser sur l'un des côtés de la poche, est alors retiré ce qui permet de libérer le profilé 6 et de permettre ainsi aux parois 7, 8 de s'écarter l'une de l'autre en mettant en communication les trois compartiments. Les produits se mélangent et la perfusion peut commencer.

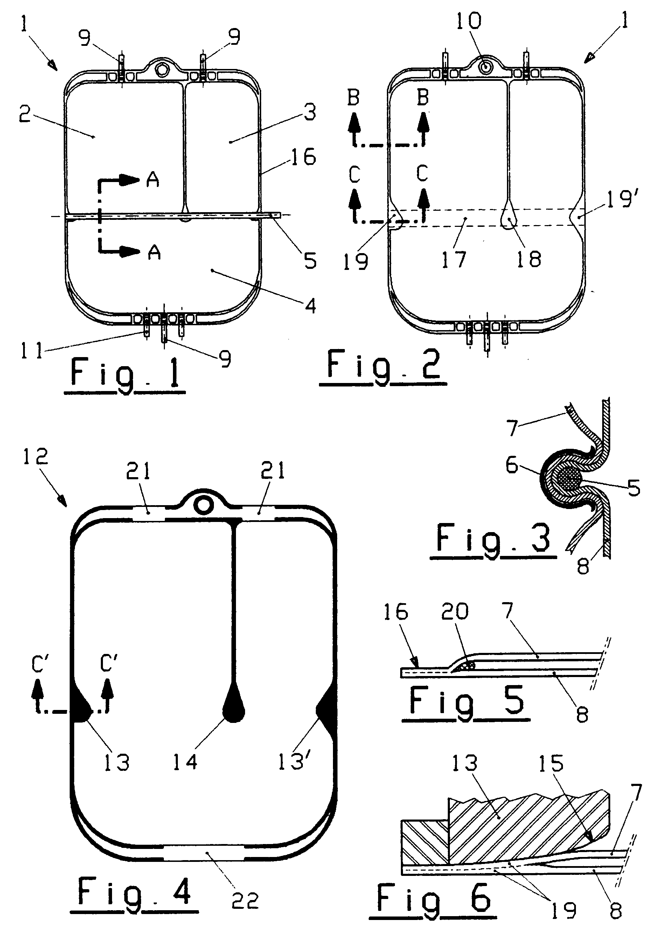

La fabrication de la poche 1 se fait à partir de deux films souples d'un plastique soudable par haute fréquence et adapté à l'usage médical. Ces films sont appliqués l'un contre l'autre et présentés entre l'électrode 12 et la platine d'une machine à souder par champ électrique à haute fréquence. Le découpage et l'assemblage des deux films sont réalisés en une seule opération grâce à une partie tranchante prévue sur toute la périphérie de l'électrode. Cette dernière comporte des empreintes en relief élargies latérales 13, 13' et centrales 14 disposées aux endroits où les lignes de soudure 16 croisent la zone d'étanchéité 17 entre compartiments. Ces empreintes ont pour rôle d'élargir la ligne de soudure à ces emplacements, en créant des "pavés de sertissage" centraux 18, et latéraux 19 dépourvus des bourrelets internes 20 normalement créés par cette technique de soudage le long des lignes de soudure (cf figure 5).

Le profil des empreintes est déterminé pour permettre "l'étalement" de l'excès de matière dû à la pression exercée lors du soudage de manière à éviter la création des bourrelets 20. A cet effet, la surface 15 (figure 6) en contact avec le film plastique 7 n'est pas plane, mais se relève progressivement vers l'intérieur de la poche, suivant une courbe arrondie.

Les empreintes 13, 14 peuvent être intégrées à l'électrode 12, mais elles seront de préférence rapportées et fixées sur le côté de cette dernière, ce qui facilite l'usinage desdites empreintes et la maintenance des électrodes.

Le dessin des pavés de sertissage, et donc des empreintes, sera adapté au matériau utilisé, aux condition de mise en oeuvre et au type de poche à réaliser. Cependant, ils auront de préférence une forme en goutte ou en demi-goutte selon qu'ils seront centraux ou latéraux (figures 2 et 4). Les pavés latéraux pourront également avoir la forme de demi-losanges comme le montrent les références 13' de la figure 4 et 19' de la figure 2. Dans tous les cas, ces formes seront suffisamment arrondies pour ne pas contrarier l'écoulement des produits contenus dans la poche, et suffisamment larges pour permettre d'utiliser un profilé rigide 6 d'une longueur légèrement inférieure à la largeur de la poche, dans le but d'éviter qu'il ne gêne les manipulations de ladite poche.

Dans les parties hautes et basses de la poche, l'électrode 12 est doublée et comporte des interruptions 21 et 22 permettant l'insertion dans le plan de joint et le soudage des tubes de remplissage 9 et d'écoulement 10, ces opérations pouvant être réalisées sur un autre poste de travail.

L'ensemble des opérations peut être effectué en continu et entièrement automatisé, ce qui permet d'atteindre un coût de fabrication très compétitif.

Les films plastiques 7, 8 utilisés seront avantageusement en éthylène vynile acétate (EVA) ou en matériau barrière multicouches dont l'une des couches présente des fonctions d'étanchéité aux gaz et à la vapeur d'eau. Cependant d'autres matériaux soudables par haute fréquence pourront être employés en fonction de la nature des solutions à stocker dans les poches.

La poche décrite comporte trois compartiments, mais il est évident que le procédé s'applique parfaitement à des poches ayant plus de trois compartiments. De même, il peut s'appliquer à la réalisation de poches destinées à d'autres utilisations que la perfusion médicale.

Le positionnement des divers éléments constitutifs donne à l'objet de l'invention un maximum d'effets utiles qui n'avaient pas été, à ce jour, obtenus par des applications similaires.

## Revendications

1. Électrode de soudage à haute fréquence pour poches multicompartiments à usage médical en film plastique, ayant pour objet la fabrication de poches destinées en particulier à la perfusion médicale et comportant plusieurs compartiments pouvant être isolés de manière étanche en serrant les parois de la poche l'une contre l'autre le long d'une zone d'étanchéité (17) au moyen d'un élément élastique amovible (5) maintenu par un profilé rigide (6), ou mis en communication, ces compartiments contenant des produits ne devant être mélangés qu'au moment de leur utilisation, ladite électrode (12) étant pourvue d'empreintes (13, 13', 14) en relief élargissant la ligne de soudure (16) aux endroits où elle croise la zone d'étanchéité (17) entre compartiments (2, 3, 4) de la poche multicompartiments (1),
cette électrode (12) se caractérisant par le fait qu'elle comporte des empreintes (13, 13', 14) élargies latérales et centrales rapportées, fixées sur le côté de l'électrode, aptes à créer des "pavés de sertissage" centraux (18) et latéraux (19, 19') dépourvus de bourrelets internes (20) et définissant avec la ligne de soudure (16) et la zone d'étanchéité (17) au moins trois compartiments pouvant être isolés par un seul profilé rigide, les empreintes centrales (14) ayant une forme en goutte, et les empreintes latérales ayant une forme en demi-goutte (13) ou en demi-losange (13') arrondi, la surface (15) des empreintes (13, 13', 14) en relief en contact avec le film plastique (7) lors du soudage, n'étant pas plane, mais se relevant progressivement vers l'intérieur de la poche, suivant une courbe arrondie, de telle manière que l'excès de matière dû à la pression exercée pendant le soudage soit étalée de façon à éviter la création des bourrelets (20).

2. Électrode de soudage à haute fréquence selon la revendication 1, se caractérisant par le fait que le dessin des empreintes en relief (13, 13', 14) est déterminé de manière à ce que les "pavés de sertissage" (18, 19, 19') aient une forme suffisamment arrondie pour ne pas perturber l'écoulement des produits contenus dans la poche (1), et soient assez larges pour permettre l'utilisation d'un profilé rigide (6) de fermeture d'une longueur légèrement inférieure à la largeur de la poche.

3. Électrode de soudage à haute fréquence selon l'une quelconque des revendications précédentes, se caractérisant par le fait qu'elle comporte sur toute la périphérie une partie tranchante permettant de réaliser en une seule opération le découpage et l'assemblage des deux films souples (7, 8) constituant la poche multicompartiments (1).

4. Électrode de soudage à haute fréquence selon l'une quelconque des revendications précédentes, se caractérisant par le fait qu'elle est doublée dans les partie hautes et basses de la poche et comporte des interruptions (21, 22) permettant l'insertion dans le plan de joint et le soudage de tubes de remplissage (9) et d'écoulement (10).

5. Poche multicompartiments à usage médical en film plastique, destinée en particulier à la perfusion médicale et comportant plusieurs compartiments pouvant être mis en communication ou isolés de manière étanche en serrant les parois de la poche l'une contre l'autre le long d'une zone d'étanchéité (17) au moyen d'un élément élastique amovible (5) maintenu par un profilé rigide (6), ces compartiments contenant des produits ne devant être mélangés qu'au moment de leur utilisation,
se caractérisant par le fait qu'elle est réalisée par soudage haute fréquence de deux films souples (7, 8) en éthylène vynile acétate (EVA) ou en matériau barrière multicouches dont l'une des couches présente des fonctions d'étanchéité aux gaz et à la vapeur d'eau, les lignes de soudure (16) étant élargies aux points où elles croisent la zone d'étanchéité (17) entre compartiments en formant des "pavés de sertissage" centraux (18) et latéraux (19, 19') sans bourrelets internes (20) et définissant avec la ligne de soudure (16) et la zone d'étanchéité (17) au moins trois compartiments pouvant être isolés par un seul profilé rigide, les "pavés de sertissage" centraux (18) ayant une forme en goutte, et les "pavés de sertissage" latéraux (19) une forme en demi-goutte ou en demi-losange arrondi.

## Claims

1. High frequency welding electrode for multipurpose plastic sheet compartmentalized bags for medical applications, used in the manufacture of bags especially for I.V. drips, and comprising several compartments which can be sealed by pressing the walls one against the other along a sealing zone (17) using a removable elastic element (5) held in position by a rigid section (6), or placed in contact when the compartments containing the products are only to be mixed at the time of their use, the said electrode (12) being provided with mouldings (13, 13', 14) which enlarge the welding line (16) at the places where it crosses the sealing zone (17) between the compartments (2, 3, 4) of the compartmentalized bag (1),
this electrode (12) is characterized in that it has enlarged added-on side and central mouldings (13, 13', 14) , fixed on the side of the electrode, capable of creating central and side welding blocks (18 and 19, 19' respectively) without internal folds (20) and defining with the weld line (16) and the sealing zone (17) at least three compartments which can be isolated by a single rigid section, the central mouldings (14) being drop-shaped, and the side mouldings half-drop (13) or triangular ridge-shaped (13') with rounded edge, the surface (15) of the mouldings (13, 13', 14) in contact with the plastic film (7) on welding is not flat but rises progressively towards the inside of the bag according to a rounded curve, so that the surplus material due to the pressure exerted during welding is spreads out so as to avoid the creation of folds (20).

2. High frequency welding electrode as per claim 1 characterized in that the shape of the moulding (13, 13', 14) is determined so that the welding blocks (18, 19, 19') have a sufficiently rounded form so as not to disturb the flow of products contained in the bag (1) and are either large enough to allow the use of a rigid closing section (6) of a length slightly less that the width of the bag.

3. High frequency welding electrode according to any one of the previous claims, characterized in that it has a peripheral cutting part to allow single action cutting and assembly of the two flexible sheets (7, 8) comprising the compartmentalized bag (1).

4. High frequency welding electrode as per any one of the aforesaid claims characterized in that it is lined in the upper and lower part of the bag and includes interruptions (21, 22) enabling insertion of the filling (9) and discharge tubes (10) in the seal and the welding.

5. Plastic sheet compartmentalized bag for medical applications, in particular I.V. drips, and comprising several compartments which can be in communication or sealed off by pressing the walls of the bag one against the other along the sealing zone (17) using a removable elastic element (5) held by a rigid section (6), these compartments containing products which are not to be mixed until the time of their use.
characterized in that it is executed by high frequency welding of the two flexible sheets (7, 8) in ethylene vinyl acetate (EVA) or in multilayer barrier material one of the layers of which provides a gas and steam tight seal, the weld lines (16) being widened at the points where they cross the sealing zone (17) between compartments by forming central and side welding blocks (18 and 19, 19' respectively) without internal folds (20) and defining with the weld line (16) and the sealing zone (17) at least three compartments which can be sealed off by a single rigid section, the central welding blocks (18) being drop-shaped and the side welding blocks (19) half-drop or rounded triangular ridge-shaped.

## Patentansprüche

1. Hochfrequenz-Schweißelektrode für mehrfach abgeteilte Beutel zum medizinischen Gebrauch aus Kunststoffolie zu dem Zweck der Herstellung von Beuteln, insbesondere bestimmt für die medizinische Perfusion und bestehend aus mehreren Abteilungen, die auf dichte Weise durch Pressen der Wände des Beutels eine gegen die andere längs eines Dichtheitsbereichs (17) mit Hilfe eines abnehmbaren elastischen Elements (5), gehalten durch ein starres Profil (6) isoliert oder in Verbindung gebracht werden können, wenn diese Abteilungen Produkte enthalten, die nur im Moment ihrer Verwendung gemischt werden dürfen; die besagte Elektrode (12) ist mit Einarbeitungen (13, 13' 14) in Relief versehen, welche die Schweißlinie (16) an den Stellen, an denen sie den Dichtheitsbereich (17) zwischen den Abteilungen (2, 3, 4) des mehrfach abgeteilten Beutels (1) kreuzen, verbreitern;
wobei sich diese Elektrode dadurch auszeichnet, daß sie über verbreiterte seitliche und zentrale Einarbeitungen (13, 13', 14) verfügt, die an der Seite der Elektrode befestigt sind, geeignet um zentrale (18) und seitliche (19, 19') "Falzpflaster" zu bilden, ohne innere Verdickungen (20), und die mit der Schweißlinie (16) und dem Dichtheitsbereich (17) mindestens drei Abteilungen definieren, welche durch ein einziges starres Profil isoliert werden können, wobei die zentralen Einarbeitungen (14) eine Tropfenform und die seitlichen Einarbeitungen die Form eines halben Tropfens (13) oder die einer abgerundeten halben Raute (13') haben, die Oberfläche (15) der Einarbeitungen nicht flach ist sondern sich progressiv gegen die Innenseite des Beutels gemäß einer abgerundeten Kurve ernebt, auf eine Weise, daß der aufgrund des während des Schweißens ausgeübte Druck entstehende Werkstoffüberschuß verteilt wird, um die Bildung von Verdickungen (20) zu vermeiden.

2. Hochfrequenz-Schweißelektrode gemäß Anspruch 1, dadurch gekennzeichnet, daß der Design der Einarbeitungen in Relief (13, 13', 14) auf solche Weise bestimmt ist, daß die "Falzpflaster" (18, 19, 19') eine genügend abgerundete Form haben, um das Fließen der in dem Beutel (1) enthaltenen Produkte nicht zu hindern und ausreichend breit sind, um die Verwendung eines starren Schließprofils (6) einer Länge, die etwas geringer als die Breite des Beutels ist, zu ermöglichen.

3. Hochfrequenz-Schweißelektrode gemäß irgendeinem der vorstehenden Ansprüche, dadurch gekennzeichnet, daß sie auf ihrer gesamten Peripherie einen scharfen Teil besitzt, der in einem einzigen Vorgang das Aufschneiden und das Zusammenfügen der beiden den mehrfach geteilten Beutel (1) bildeten flexiblen Folien (7, 8) ermöglicht.

4. Hochfrequenz-Schweißelektrode gemäß irgendeinem der vorstehenden Ansprüche, dadurch gekennzeichnet, daß sie in ihren oberen und unteren Teilen gedoppelt ist und Unterbrechungen (21, 22) aufweist, welche das Einführen und das Schweißen von Füllröhrchen (9) und Ablaßröhrchen (10) ermöglichen.

5. Mehrfach abgeteilter Beutel zum medizinischen Gebrauch, aus Kunststoffolie, im besonderen bestimmt für die medizinische Perfusion und mehrere Abteilungen enthaltend, die in Verbindung gebracht oder auf dichte Weise isoliert werden können durch Pressen der Wände des Beutels eine gegen die andere längs eines Dichtheitsbereichs (17) mittels eines elastischen Elementes (5), das durch ein starres Profil (6) gehalten wird, wobei diese Abteilungen Produkte enthalten, die nur im Moment ihrer Verwendung gemischt werden dürfen,
dadurch gekennzeichnet, daß der Beutel durch Hochfrequenz-Schweißen von zwei flexiblen Folien (7, 8) aus Äthylenvynilazetat (EVA) oder aus mehrlagensperrendem Werkstoff, von dem eine der Lagen Dichtheitsfunktionen für Gas und Wasserdampf aufweist, die Schweißlinien (16) dabei an den Stellen erweitert sind, an denen sie den Dichtheitsbereich (17) zwischen den Abteilungen kreuzen und zentrale (18) und seitliche (19, 19') "Falzpflaster" bilden, ohne innere Verdickungen (20), die mit der Schweißlinie (16) und dem Dichtheitsbereich (17) mindestens drei Abteilungen definieren, welche durch ein einziges starres Profil isoliert werden können, wobei die zentralen "Falzpflaster" (18) eine Tropfenform und die seitlichen "Falzpflaster" (19) die Form eines halben Tropfens oder die einer abgerundeten halben Raute aufweisen.
